# EUROPÄISCHE PATENTSCHRIFT

(11) **EP 4 227 038 B1**
(45) Veröffentlichungstag und Bekanntmachung des Hinweises auf die Patenterteilung: **26.11.2025**
(21) Anmeldenummer: 22156671.4
(22) Anmeldetag: 15.02.2022
(51) Int. Cl.: B23K 37/053, B23K 101/06

(54) **AUFSPANNPLATTE**
CLAMPING PLATE
PLAQUE DE SERRAGE

(43) Veröffentlichungstag der Anmeldung: 16.08.2023
(73) Patentinhaber: Georg Fischer Rohrleitungssysteme AG, 8201 Schaffhausen (CH)
(72) Erfinder: Rösch, Jürgen, 79853 Lenzkirch (DE); Graf, Marcel, 8212 Neuhausen am Rheinfall (CH); de Rossi, Dominic, 78333 Stockach (DE)
(74) Vertreter: Fenner, Seraina

(56) Entgegenhaltungen:
- CN-A- 107 825 012
- US-A- 2 849 900

## Beschreibung

Die Erfindung betrifft eine Aufspannplatte zum rechtwinkligen und zentrischen Anbohren eines Rohres und/oder zum rechtwinkligen und zentrischen Anschweissen eines Abzweigrohres, beinhaltend eine rechteckige Platte, wobei in der Mitte eine kreisförmige Öffnung zur Aufnahme eines Werkstücks oder Werkzeugs angeordnet ist, zwei keilförmige Aufleger, wobei die beiden sich gegenüberliegenden Aufleger parallel zueinander und linear an der Platte verschiebbar angeordnet sind.

Das Anbohren von Rohrleitungen zum Anschliessen von Abzweigungen wird oft mit einem blossen Bohrer ohne Hilfsführungen durchgeführt. Vor allem bei vorisolierten Rohrleitungen kann das dazu führen, dass nicht zentrisch oder auch schräg auf die Rohrleitung gebohrt wird oder die Anschlussstutzen nicht gerade angeschweisst werden. Bereits ein kleiner Versatz oder eine Schieflage der Bohrung oder eine in der Bohrung geneigt angeordneten Führungshülse gegenüber der Mittelachse stellt nicht mehr sicher, dass der Anschlussstutzen gut mit der Rohrleitung bzw. der Bohrung verschweisst werden kann oder dass der Rohrstutzen gerade ausgerichtet ist.

Die JP 59124503 A2 offenbart eine Bearbeitungsvorrichtung zur Befestigung an einer Rohrleitung um diese zu bearbeiten. Nachteiteilig ist die massive Bauweise sowie dass die Vorrichtung fest für einen Durchmesser eingestellt ist und nicht an den Aussendurchmesser des Rohres anpassbar.

Die US 4094612 A offenbart einen starren Support der sich über die schräg geschnittenen Seitenwände am Aussendurchmesser des Rohrs abstützt. Auch hier ist nachteilig, dass der Support für einen Rohrdurchmesser geeignet ist. Die US 2 849 900 A (Basis für den Oberbegriff des Anspruchs 1) offenbart eine Aufspannplatte zum rechtwinkligen und zentrischen Anbohren eines Rohres.

Es ist Aufgabe der Erfindung eine Vorrichtung vorzuschlagen, welche eine zentrische Bearbeitung auf einen Rohraussendurchmesser gewährleistet und für unterschiedliche Rohrdurchmesser einsetzbar ist.

Diese Aufgabe wird erfindungsgemäss durch eine Aufspannplatte nach Anspruch 1 gelöst.

Die erfindungsgemässe Aufspannplatte zum rechtwinkligen und zentrischen Anbohren eines Rohres und /oder zum rechtwinkligen und zentrischen Anschweissen eines Abzweigrohres, beinhaltet eine rechteckige Platte, in deren Mitte eine kreisförmige Öffnung zur Aufnahme eines Werkstücks oder Werkzeugs angeordnet ist. Einerseits kann die Öffnung dazu genutzt werden, dass damit ein Bohrer geführt wird oder aber auch, dass eine bereits an einem Rohr vorzugsweise vorisolierten Rohr, angebrachte Hülse, welche rechtwinklig auf den Aussendurchmesser des vorisolierten Rohres gerichtet ist, durch die Öffnung in der Platte der Aufspannplatte aufgenommen wird und durch zentrisch auf den Aussendurchmesser ausgerichtet wird. Ebenso beinhaltet die erfindungsgemässe Aufspannplatte zwei keilförmige Aufleger, wobei die beiden sich gegenüberliegenden Aufleger parallel zueinander und linear an der Platte verschiebbar angeordnet sind. Die beiden keilförmigen Aufleger sind an der Unterseite der Platte angeordnet, wobei der eine Aufleger nahe einer Aussenseite der Platte und der andere Aufleger nahe an der gegenüberliegenden Aussenseite der Platte angeordnet ist. Durch den dadurch erzeugten weiten Abstand der beiden Aufleger zueinander, ergibt dies eine stabile Auflage der erfindungsgemässen Aufspannplatte am Aussendurchmesser eines Rohres. Die beiden Aufleger an der Platte sind mit einer Linearführung stufenlos verstellbar angeordnet. Dies ermöglicht eine stufenlose Anpassung auf unterschiedliche Rohrdurchmesser. Durch die keilförmigen Aufleger ist gewährleistet, dass die Öffnung in der Platte immer auf das Zentrum gerichtet ist, wodurch Bohrungen oder Verschweissungen von Anschlussstutzen mit Hilfe der Aufspannplatte immer zentrisch ausgerichtet sind.

Es ist vorteilhaft, dass die beiden keilförmigen Aufleger gegengleich an der Platte ausgerichtet sind. Das heisst, dass die beiden spitzen Winkel sich zugerichtet sind, solange die spitzen Winkel der Aufleger noch nicht über die Mittelachse der Öffnung hinausragen und danach sind sie sich abgewandt. Die beiden Auflageflächen der Aufleger bilden mit ihren Auflageflächen ein gleichschenkliges Dreieck beim Auflegen an den Aussendurchmesser des Rohres.

Es ist vorteilhaft, wenn die keilförmigen Aufleger jeweils einen spitzen Winkel aufweisen. Dadurch wird zwischen den beiden Aufleger ein Auflagewinkel gebildet, der eine optimale Auflage der beiden Auflageflächen der Aufleger am Aussendurchmesser des Rohres gewährleistet und bringt eine gute Stabilität. Vorteilhaft ist es, wenn die spitzen Winkel der beiden Aufleger zueinander gerichtet sind. Dadurch wird wie oben erwähnt ein Dreieck gebildet das am Aussendurchmesser des Rohres anliegt. Die spitzen Winkel der Aufleger sind bis sie den Mittelpunkt der Öffnung erreichen zueinander gerichtet und bei einer weiteren Verstellung für einen kleineren Rohrdurchmesser über den Mittelpunkt hinaus, bewegen sich die spitzen Winkel voneinander weg.

Als bevorzugte Ausführungsform hat sich gezeigt, wenn die spitzen Winkel der Aufleger kleiner als 45° sind, vorzugsweise kleiner 30°. Durch die relativ flachen Winkel der beiden Aufleger bildet sich ein relativ grosser Winkel zwischen den beiden Auflageflächen von grösser 90° was auch wieder den Effekt einer guten, stabilen Positionierung der Aufspannplatte am Rohraussendurchmesser ergibt. Die beiden Aufleger sind identisch ausgebildet.

Vorzugsweise weist die Platte Befestigungsmittel auf um die Aufspannplatte am Rohr zu befestigen. Als Befestigungsmittel weist die Platte vorzugsweise Ausnahmen oder Stege auf an denen ein Spannmittel befestigt werden kann. Als Spannmittel können Bänder oder auch Klemmen angebracht werden.

Erfindungsgemäß sind als Linearführung an den Auflegern jeweils eine Schiene und in der Platte die entsprechenden Führungen zur Aufnahme der Schiene angeordnet. Dadurch wird eine stufenlose Anpassung an die Aussendurchmesser der Rohre ermöglicht. Als bevorzugte Ausführung hat sich eine Schwalbenschwanz- oder T-Nutenführung gezeigt.

Vorzugsweise sind zur Arretierung der Aufleger Feststellmittel an der Aufspannplatte angeordnet. Als bevorzugte Ausführungsform hat sich gezeigt, wenn die Feststellmittel als Feststellschrauben ausgebildet sind und an der Aussenseite der Platte angeordnet sind so dass sie auf die Linearführung drücken um diese zu Arretieren.

Vorzugsweise sind die Platte und die Aufleger aus Kunststoff hergestellt. Dies macht die Aufspannplatte leicht und angenehm in der Handhabe.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässe Aufspannplatte eingestellt für kleinere Rohrdurchmesser,
- Fig. 2: eine Seitenansicht einer erfindungsgemässen Aufspannplatte,
- Fig. 3: eine Draufsicht einer erfindungsgemässen Aufspannplatte,
- Fig. 4: eine dreidimensionale Ansicht einer erfindungsgemässe Aufspannplatte auf einem Rohr befestigt und
- Fig. 5: eine dreidimensionale Ansicht einer erfindungsgemässe Aufspannplatte ohne Rohr.

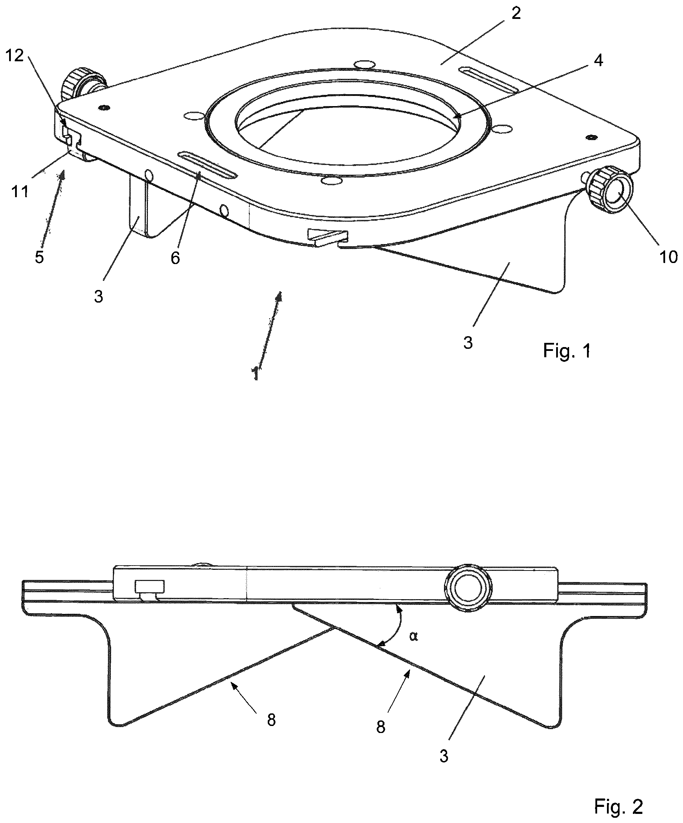

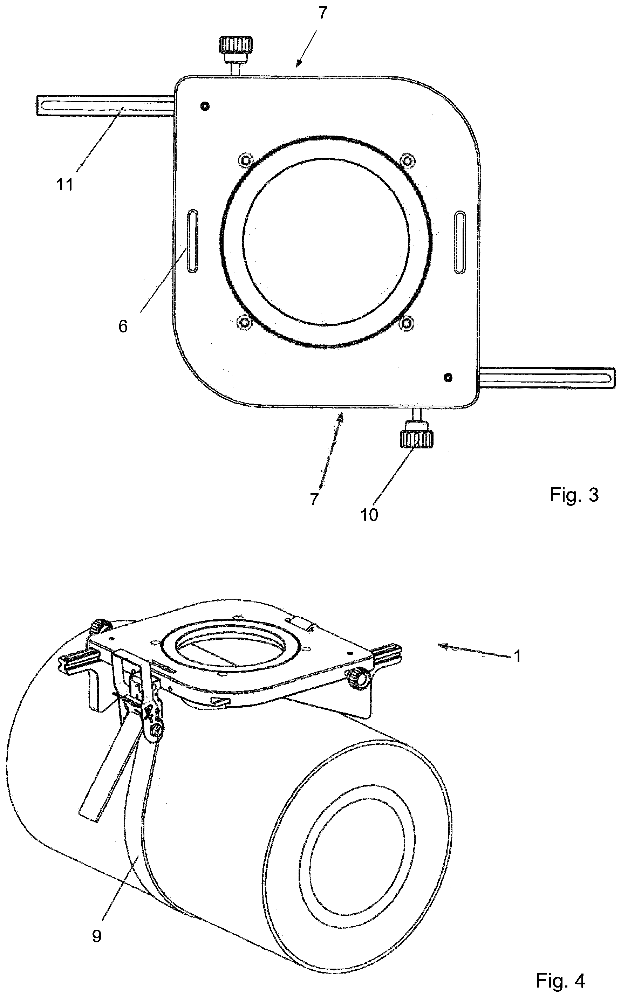

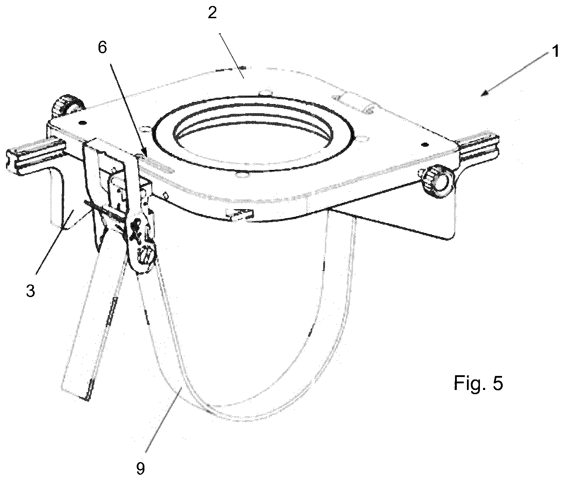

Die in Fig. 1 dargestellte Zeichnung zeigt die erfindungsgemässe Aufspannplatte 1 in dreidimensionaler Ansicht. Die Aufspannplatte 1 dient dem rechtwinkligen und zentrischen Anbohren eines Rohres und/oder rechtwinkligen und zentrischen Anschweissen eines Abzweigrohres. Die Aufspannplatte 1 weist eine rechtwinklige Platte 2 auf, die in der Mitte eine Öffnung 4 aufweist, die der Aufnahme oder Führung eines Werkzeugs oder Werkstücks dient. Durch die kreisförmige Öffnung 4 wird der Bohrer zum zentrischen Anbohren der Rohrleitung geführt, wobei die Öffnung 4 aber auch der Aufnahme einer Hülse dienen kann. Dies ist vor allem bei vorisolierten Rohrleitungen der Fall, bei der in der Aussen- und Isolationsschicht eine Bohrung angebracht wird und dann eine Hülse in dieser Bohrung angeordnet wird, welche dann mittels der Aufspannplatte zentrisch ausgerichtet und in dieser Position justiert wird. An der Unterseite der Platte 2 sind zwei parallel verlaufende, keilförmige Aufleger 3 angeordnet. Diese verlaufen rechtwinklig zur Platte 2 und sind nahe der zwei gegenüberliegenden Aussenseiten 7 angeordnet, was aus der Fig. 3 gut ersichtlich ist. Dadurch wird eine breite Abstützung der Aufspannplatte 1 auf dem Rohraussendurchmesser erzielt. Die Aufleger 3 sind linear, vorzugsweise über eine Linearführung 5 verstellbar, wobei dazu am Aufleger 3 vorzugsweise eine Schiene 11 und in der Platte 2 eine Führung 12 angeordnet sind. Als vorteilhaft hat sich gezeigt, wenn diese formschlüssig ineinandergreifen, beispielsweise wie die abgebildete T-Nutenführung oder auch eine Schwalbenschwanzführung. Die Aufleger 3 weisen vorzugsweise einen spitzen Winkel α auf, was gut in Fig. 2 ersichtlich ist. Die beiden gegenseitig zueinander ausgerichteten spitzen Winkel α und die Auflageflächen 8 der Aufleger 3 bilden dann ein Dreieck mit dem sie optimal an den Aussendurchmesser der Rohrleitung anzupassen sind. Mittels eines Spannmittels 9, das an den an der Platte 2 angeordneten Befestigungsmitteln 6 angebracht ist, wird die Aufspannplatte 1 am Rohr befestigt. Nach der Einstellung der Aufleger 3 am Aussendurchmesser werden diese mit den Feststellmitteln 10 arretiert. Fig. 4 zeigt die erfindungsgemässe Aufspannplatte 1 an einem Rohr befestigt. In der dargestellten Ausführungsform ist die Aufspannpatte 1 mit einem Spannmittel 9 welches an den Befestigungsmitteln 6 der Platte 2 fixiert ist, befestigt. Fig. 5 zeigt die erfindungsgemässe Aufspannplatte 1 noch ohne Rohr um das die Aufspannplatte 1 gespannt wird. Vorzugsweise wird als Spannmittel 9 eine Spanngute verwenden wobei auch andere Spannmittel denkbar sind.

### Bezugszeichenliste

- 1: Aufspannplatte
- 2: Platte
- 3: Aufleger
- 4: Öffnung
- 5: Linearführung
- 6: Befestigungsmittel
- 7: Aussenseite
- 8: Auflagefläche
- 9: Spannmittel
- 10: Feststellmittel
- 11: Schiene
- 12: Führung

- α: Spitzer Winkel in Aufleger

## Patentansprüche

1. Aufspannplatte (1) zum rechtwinkligen und zentrischen Anbohren eines Rohres und/oder zum rechtwinkligen und zentrischen Anschweissen eines Abzweigrohres, beinhaltend eine rechteckige Platte (2), in deren Mitte eine kreisförmige Öffnung (4) zur Aufnahme eines Werkstücks oder Werkzeugs angeordnet ist, zwei keilförmige Aufleger (3), wobei die beiden sich gegenüberliegenden Aufleger (3) parallel zueinander angeordnet sind, **dadurch gekennzeichnet, dass** die Aufleger (3) linear an der Platte (2) verschiebbar angeordnet sind, wobei die Aufleger (3) an der Platte (2) mit einer Linearführung (5) stufenlos verstellbar angeordnet sind und an den Auflegern (3) jeweils eine Schiene (11) und in der Platte (2) die entsprechenden Führungen (12) zur Aufnahme der Schienen (11) angeordnet sind.

2. Aufspannplatte (1) nach Anspruch 1, **dadurch gekennzeichnet, dass** die beiden keilförmigen Aufleger (3) gegengleich an der Platte (2) ausgerichtet sind.

3. Aufspannplatte (1) nach Anspruch 1 oder 2, **dadurch gekennzeichnet, dass** die keilförmigen Aufleger (3) jeweils einen spitzen Winkel (α) aufweisen.

4. Aufspannplatte (1) nach Anspruch 1 bis 3, **dadurch gekennzeichnet, dass** die spitzen Winkel (α) der beiden Aufleger (3) zueinander gerichtet sind.

5. Aufspannplatte nach Anspruch 1 bis 4, **dadurch gekennzeichnet, dass** die spitzen Winkel kleiner als 45° sind, vorzugsweise kleiner 30°.

6. Aufspannplatte (1) nach Anspruch 1 bis 5 **dadurch gekennzeichnet, dass** die Platte (2) Befestigungsmittel (6) aufweist um die Aufspannplatte (1) am Rohr zu befestigen.

7. Aufspannplatte (1) nach Anspruch 1 bis 6, **dadurch gekennzeichnet, dass** zur Arretierung der Aufleger (3) Feststellmittel (10) an der Aufspannplatte (1) angeordnet sind.

8. Aufspannplatte nach Anspruch 1 bis 7, **dadurch gekennzeichnet, dass** die Platte und die Aufleger aus Kunststoff sind.

## Claims

1. Clamping plate (1) for right-angled and centric drilling of a pipe and/or for right-angled and centric welding of a branch pipe, including a rectangular plate (2), in the centre of which a circular opening (4) for receiving a workpiece or tool is arranged, two wedge-shaped supports (3), wherein the two opposite supports (3) are arranged parallel to one another, **characterized in that** the supports (3) are arranged in a linearly displaceable manner on the plate (2), wherein the supports (3) are arranged on the plate (2) with a linear guide (5) in a continuously adjustable manner and in each case a rail (11) is arranged on the supports (3) and the corresponding guides (12) for receiving the rails (11) are arranged in the plate (2).

2. Clamping plate (1) according to Claim 1, **characterized in that** the two wedge-shaped supports (3) are aligned oppositely on the plate (2).

3. Clamping plate (1) according to Claim 1 or 2, **characterized in that** the wedge-shaped supports (3) each have an acute angle (α).

4. Clamping plate (1) according to Claim 1 to 3, **characterized in that** the acute angles (a) of the two supports (3) are directed towards each other.

5. Clamping plate according to Claim 1 to 4, **characterized in that** the acute angles are less than 45°, preferably less than 30°.

6. Clamping plate (1) according to Claim 1 to 5, **characterized in that** the plate (2) has fastening means (6) for fastening the clamping plate (1) to the pipe.

7. Clamping plate (1) according to Claim 1 to 6, **characterized in that** locking means (10) are arranged on the clamping plate (1) for locking the supports (3).

8. Clamping plate according to Claim 1 to 7, **characterized in that** the plate and the supports are made of plastic.

## Revendications

1. Plaque de serrage (1) pour le perçage perpendiculaire et centré d'un tube et/ou pour le soudage perpendiculaire et centré d'un tube de dérivation, comprenant une plaque rectangulaire (2) au centre de laquelle est agencée une ouverture circulaire (4) destinée à recevoir une pièce ou un outil, deux supports en forme de coin (3), les deux supports opposés (3) étant agencés parallèlement l'un à l'autre, **caractérisée en ce que** les supports (3) sont agencés de manière à pouvoir coulisser linéairement sur la plaque (2), les supports (3) étant agencés sur la plaque (2) de manière réglable en continu avec un guidage linéaire (5) et un rail (11) étant agencé sur chacun des supports (3) et les guidages correspondants (12) destinés à recevoir les rails (11) étant agencés dans la plaque (2).

2. Plaque de serrage (1) selon la revendication 1, **caractérisée en ce que** les deux supports en forme de coin (3) sont orientés de manière opposée sur la plaque (2).

3. Plaque de serrage (1) selon la revendication 1 ou 2, **caractérisée en ce que** les supports en forme de coin (3) présentent chacun un angle aigu (α).

4. Plaque de serrage (1) selon les revendications 1 à 3, **caractérisée en ce que** les angles aigus (α) des deux supports (3) sont dirigés l'un vers l'autre.

5. Plaque de serrage selon les revendications 1 à 4, **caractérisée en ce que** les angles aigus sont inférieurs à 45°, de préférence inférieurs à 30°.

6. Plaque de serrage (1) selon les revendications 1 à 5, **caractérisée en ce que** la plaque (2) présente des moyens de fixation (6) pour fixer la plaque de serrage (1) au tube.

7. Plaque de serrage (1) selon les revendications 1 à 6, **caractérisée en ce que** des moyens de blocage (10) sont agencés sur la plaque de serrage (1) pour immobiliser les supports (3).

8. Plaque de serrage selon les revendications 1 à 7, **caractérisée en ce que** la plaque et les supports sont en matière plastique.
